# EUROPÄISCHE PATENTANMELDUNG

(11) **EP 3 470 693 A1**
(43) Veröffentlichungstag der Anmeldung: **17.04.2019**
(21) Anmeldenummer: 18000684.3
(22) Anmeldetag: 17.08.2018
(51) Int. Cl.: F16B 33/02, F16B 39/284, F16B 39/38, F16B 39/30

(54) **MUTTER**

(30) Priorität: 10.10.2017 DE 102017009395
(71) Anmelder: Neumayer Tekfor Engineering GmbH, 77756 Hausach (DE)
(72) Erfinder: Etzold, Thomas, 77654 Offenburg (DE); Lehmann, Martin, 78132 Hornberg (DE)

(57) **Zusammenfassung**

Die Erfindung bezieht sich auf eine Mutter (1) mit einem Mutternkörper (2) und mehreren Klemmsegmenten (3). Die Mutter (1) weist ein Innengewinde (10) mit einem ersten Abschnitt (41) und einem zweiten Abschnitt (42) auf. Der erste Abschnitt (41) weist eine erste Gewindesteigung auf und mündet an einer der oberen Stirnseite (20) des Mutternkörpers (2) gegenüberliegenden unteren Stirnseite (21). Der zweite Abschnitt (42) weist eine zweite Gewindesteigung auf, die kleiner als die erste Gewindesteigung ist.

## Beschreibung

Die vorliegende Erfindung betrifft eine Mutter mit einem Mutternkörper und mehreren von einer oberen Stirnseite des Mutternkörpers ausgehenden Klemmsegmenten, wobei die Mutter ein sich entlang einer Längsachse erstreckendes Innengewinde aufweist.

Eine gattungsgemäße Mutter wird in der DE 195 32 709 A1 offenbart. Die Mutter verfügt dabei über ein Innengewinde mit einer konstanten Steigung. Ein Verfahren zur Herstellung einer Mutter mit einer sich verändernden Steigung des Innengewindes beschreibt die US 4,956,888. Die CH 319 333 A offenbart eine Mutter mit einer sich konstant verändernden Steigung des Innengewindes. Eine sich in einer Richtung konisch verjüngende Mutter offenbart die CH 265609 A. Der sich konisch verjüngende Abschnitt weist dabei Nuten auf. Ähnliche Klemmzungen offenbart die DE 100 52 915 B4. Eine Mutter mit einer inneren Aussparung zur Aufnahme eines Schmiermittels wird in der US 1,123,505 beschrieben. Die Vorteile für die Befestigung, wenn sich die Steigung des Innengewindes der Mutter von der Steigung des Außengewindes des Gegenstücks unterscheidet, werden in der US 2,870,668 diskutiert.

Für die Sicherung von Schraubverbindungen offenbaren die GB 2 086 516 A und die DE 904 013 B Schrauben, die jeweils über einen Freistich entlang ihres Außengewindes verfügen.

Es zeigt sich, dass bedingt durch Fertigungstoleranzen ein Verlust des Klemmmoments zwischen einem ersten Befestigen der Mutter und dem anschließenden ersten Lösen der Mutter auftreten kann.

Die Aufgabe der Erfindung besteht daher darin, eine gegenüber dem Stand der Technik verbesserte Mutter vorzuschlagen.

Die Erfindung löst die Aufgabe dadurch, dass das Innengewinde der Mutter mindestens einen ersten Abschnitt und einen zweiten Abschnitt aufweist, wobei der erste Abschnitt eine über den ersten Abschnitt konstante erste Gewindesteigung aufweist, wobei der erste Abschnitt an einer der oberen Stirnseite des Mutternkörpers gegenüberliegenden unteren Stirnseite mündet, und wobei der zweite Abschnitt eine über den zweiten Abschnitt konstante zweite Gewindesteigung, die kleiner als die erste Gewindesteigung ist, aufweist.

Die erste Gewindesteigung des ersten Abschnitts der erfindungsgemäßen Mutter ist dabei vorzugsweise passend zu der Steigung des Gegenstücks, also z. B. des Bolzens, auf dem die Mutter aufgebracht werden soll. Die erste Gewindesteigung des ersten Abschnitts kann daher auch als Regelsteigung der Mutter bezeichnet werden. Dies ist somit quasi die Sollsteigung der Mutter, die sich auf den jeweiligen Bolzen oder den Anwendungsfall der Mutter bezieht. Vorzugsweise grenzen der erste Abschnitt und der zweite Abschnitt unmittelbar aneinander an. Insgesamt wird das Innengewinde der Mutter durch ein Innengewinde des Mutternkörpers und durch ein Innengewinde der Klemmsegmente gebildet.

Die erfindungsgemäße Mutter verfügt somit nicht über nur eine einzige Gewindesteigung, die über das gesamte Innengewinde konstant ist. Dies beruht auf der Erkenntnis, dass bei einer konstanten Gewindesteigung - wie im Stand der Technik - ein direkter Kontakt zwischen den Fügepartnern Mutter und z. B. Bolzen nur über den ersten und den letzten Gewindegang des Innengewindes der Mutter stattfindet. Diese Kontaktflächen sind jedoch in der Regel zu klein, um übliche Vorspannkräfte ohne plastische Deformation übertragen zu können. Eine plastische Deformation reduziert jedoch die Klemmung im Klemmsegment. Die erfindungsgemäße Mutter erlaubt einen möglichst weitgehenden Erhalt der Klemmkräfte im Klemmbereich und erlaubt dies im Wesentlichen unabhängig vom aufgebrachten Anzugsmoment und der resultierenden Vorspannkraft.

Der erste Abschnitt mündet an einer der oberen Stirnseite des Mutternkörpers gegenüberliegenden unteren Stirnseite des Mutternkörpers und damit der Mutter. Die Mutter wird während der Befestigung vorzugsweise mit der unteren Stirnseite - also mit dem Mutternkörper - zuerst auf dem Gegenstück, z. B. einem Bolzen aufgebracht. Somit wird beim Befestigen zunächst der Abschnitt mit dem vorzugsweise zu dem Gegenstück passenden Innengewinde - also der ersten Gewindesteigung - aufgedreht und dann erst der zweite Abschnitt.

Eine Ausgestaltung sieht vor, dass die Klemmsegmente sich - insbesondere konisch - verjüngen. Die Klemmsegmente neigen sich somit in dieser Ausgestaltung in Richtung der Längsachse der Mutter. Dies geschieht in einer Ausgestaltung insbesondere in der Form eines Konus.

Eine Ausgestaltung besteht darin, dass eine Höhe des zweiten Abschnitts entlang der Längsachse im Wesentlichen gleich einer Höhe der Klemmsegmente entlang der Längsachse ist. Ergänzend ist in einer Ausgestaltung vorgesehen, dass das Innengewinde der Mutter nur aus dem ersten Abschnitt und dem zweiten Abschnitt besteht. Daher hat in dieser Ausgestaltung das Innengewinde nur die erste Gewindesteigung und die zweite Gewindesteigung. Dabei endet in einer Ausgestaltung der zweite Abschnitt mit der freien Stirnseite der Klemmsegmente und damit auch mit der oberen Stirnseite der Mutter. Vorzugsweise endet in diesem Fall der erste Abschnitt an der oberen Stirnseite des Mutternkörpers und damit dort, wo die Klemmsegmente beginnen.

Eine Ausgestaltung besteht darin, dass das Innengewinde der Mutter einen dritten Abschnitt aufweist. Vorzugsweise folgen der erste Abschnitt, der zweite Abschnitt und der dritte Abschnitt unmittelbar aufeinander. Der dritte Abschnitt verfügt über eine dritte Gewindesteigung, die innerhalb des dritten Abschnitts - alternative Bezeichnung ist: über den dritten Abschnitt - konstant ist.

Eine Ausgestaltung sieht vor, dass eine Gewindesteigung des dritten Abschnitts im Wesentlichen gleich der ersten Gewindesteigung des ersten Abschnitts ist. In dieser Ausgestaltung gibt es somit drei Abschnitte, von denen zwei Abschnitte (nämlich der erste und der dritte Abschnitt) die gleiche Gewindesteigung aufweisen. Zwischen den beiden Abschnitten befindet sich ein weiterer Abschnitt (nämlich der zweite Abschnitt), der eine kleinere Gewindesteigung hat. Eine Ausgestaltung sieht vor, dass das Innengewinde der Mutter nur aus dem ersten Abschnitt, dem zweiten Abschnitt und dem dritten Abschnitt besteht. Damit hat das Innengewinde der Mutter nur drei Abschnitte, von denen zwei (nämlich erster und dritter Abschnitt) die gleiche Gewindesteigung und einer weiterer - von den zwei anderen Abschnitten axial eingefasster - Abschnitt (nämlich der zweite Abschnitt) eine kleinere Steigung aufweist.

In einer Ausgestaltung mündet der dritte Abschnitt mit einem oberen Ende der Mutter. In dieser Ausgestaltung mündet der erste Abschnitt mit der unteren Stirnseite des Mutternkörpers und damit mit dem unteren Ende der Mutter und mündet der dritte Abschnitt mit dem oberen Ende der Mutter und damit auch mit dem freien Ende der Klemmsegmente. Somit weist die Mutter insgesamt an einer oberen Stirnseite und an einer unteren Stirnseite die gleiche Gewindesteigung auf. Dazwischen befindet sich der zweite Abschnitt.

Eine Ausgestaltung besteht darin, dass eine Höhe des dritten Abschnitts entlang der Längsachse im Wesentlichen gleich einer Höhe der Klemmsegmente entlang der Längsachse ist. Alternativ ist vorgesehen, dass eine Höhe des dritten Abschnitts entlang der Längsachse größer als eine Höhe der Klemmsegmente entlang der Längsachse ist. Alternativ ist vorgesehen, dass eine Höhe des dritten Abschnitts entlang der Längsachse kleiner als eine Höhe der Klemmsegmente entlang der Längsachse ist. In einer Ausgestaltung ist insbesondere vorgesehen, dass der dritte Abschnitt mit der freien Stirnseite der Klemmsegmente endet. Je nach Ausgestaltung umfasst daher der dritte Abschnitt die Klemmsegmente, umfasst nur einen axialen Teil der Klemmsegmente oder erstreckt sich sogar in den Mutternkörper hinein.

Eine Ausgestaltung sieht vor, dass der zweite Abschnitt mindestens einen Gewindegang umfasst. In dieser Ausgestaltung ist die axiale Höhe des zweiten Abschnitts derartig, dass sich mindestens ein vorzugsweise vollständiger Gewindegang ergibt.

Im Einzelnen gibt es eine Vielzahl von Möglichkeiten, die erfindungsgemäße Mutter auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine räumliche Darstellung einer Mutter,
- Fig. 2: einen Schnitt durch eine Mutter gemäß dem Stand der Technik,
- Fig. 3: einen Schnitt durch eine erste Variante der erfindungsgemäßen Mutter,
- Fig. 4: einen Schnitt durch eine nicht erfindungsgemäße Mutter und
- Fig. 5: einen Schnitt durch eine zweite Variante der erfindungsgemäßen Mutter.

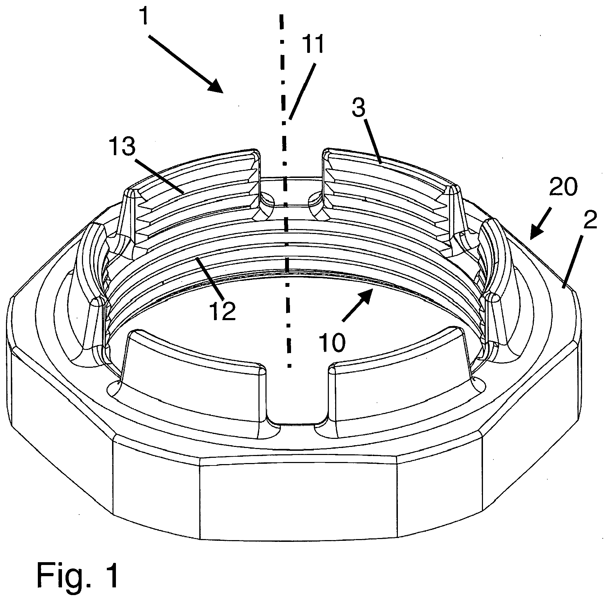

Die Fig. 1 zeigt eine prinzipielle Ausgestaltung einer Mutter 1, die aus einem Mutternköper 2 und Klemmsegmenten 3 besteht. Der Mutternkörper 2 hat in der gezeigten Ausgestaltung eine mehrkantige Außenseite, die Wirkflächen für Werkzeuge bei der Montage und Demontage der Mutter 1 bildet. Die Mutter 1 wird dabei beispielsweise auf einen - hier nicht dargestellten - Bolzen mit einem Außengewinde aufgeschraubt bzw. davon abgeschraubt.

Von der oberen Stirnseite 20 des Mutternkörpers 2 gehen die Klemmsegmente 3 aus. Die Klemmsegmente 3 (eine alternative Bezeichnung ist Klemmzungen) verjüngen sich dabei in der dargestellten Ausgestaltung konisch in Richtung der Längsachse 11. Die Klemmsegmente 3 erzeugen mit ihrem freien Ende, das der oberen Stirnseite 20 des Mutternkörpers 2 gegenüberliegt, das obere Ende der Mutter 1.

Der Mutternkörper 2 und die Klemmsegmente 3 erzeugen insgesamt ein Innengewinde 10 der Mutter 1, das sich aus dem Innengewinde 12 des Mutternkörpers 2 sowie aus dem Innengewinde 13 der Klemmsegmente 3 zusammensetzt. In der dargestellten Ausgestaltung ergibt sich insbesondere ein vollständig durchgehendes Innengewinde 10 der Mutter 1 entlang der Längsachse 11.

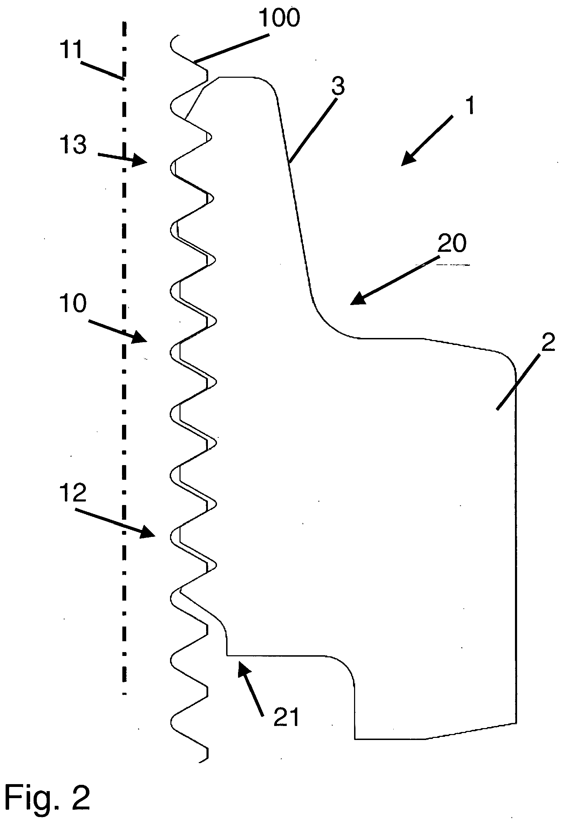

Die Fig. 2 zeigt einen Schnitt durch eine Mutter 1 gemäß dem Stand der Technik, die auf einem Bolzen 100 aufgebracht worden ist. Die Mutter 1 verfügt dabei über den Mutternkörper 2 und die Klemmsegmente 3, die von der oberen Stirnseite 20 des Mutternkörpers 2 ausgehen und in Richtung des freien Endes konisch verjüngt sind. Der oberen Stirnseite 20 des Mutternkörpers 2 liegt eine untere Stirnseite 21 gegenüber, die damit auch eine Stirnseite der Mutter 1 bildet. Das obere, freie Ende der Klemmsegmente 3 ist eine weitere Stirnseite der Mutter 1. Zwischen den beiden Stirnseiten der Mutter 1 befindet sich ein Innengewinde 10, das von dem Innengewinde 12 des Mutternkörpers 2 und dem Innengewinde 13 der Klemmsegmente 3 gebildet wird.

Das Innengewinde 10 der Mutter 1 erstreckt sich entlang der Längsachse 11 und hat eine konstante Steigung. Weiterhin ist ein Steigungsfehler gegeben. Die Gewindesteigung des Innengewindes 10 entspricht somit nicht der Gewindesteigung des Außengewindes des Bolzens 100.

In den folgenden Abbildungen werden Ausgestaltungen beschrieben, in denen das Innengewinde 10 der erfindungsgemäßen Mutter 1 entweder aus drei Abschnitten oder aus zwei Abschnitten besteht. In den Abbildungen sind jeweils die Mutter 1 und ein Bolzen 100 dargestellt.

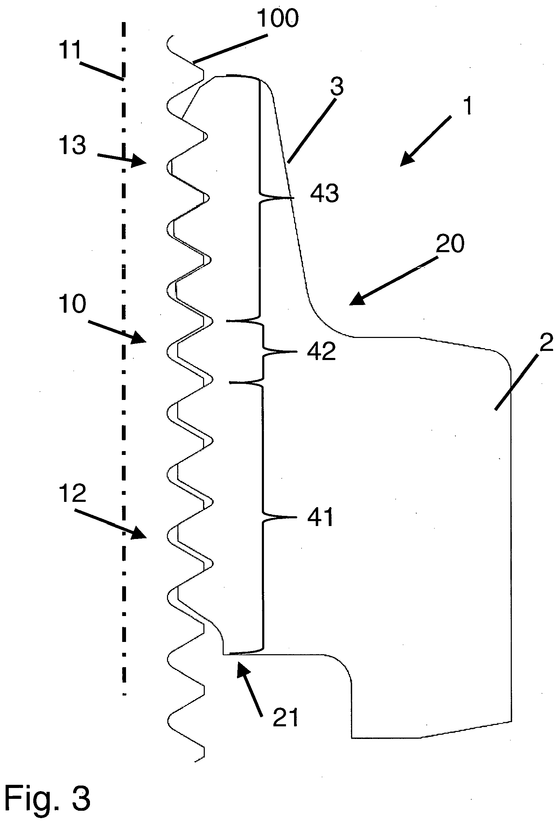

Die Mutter 1 der Ausgestaltung der Fig. 3 hat ein Innengewinde 10, das sich aus insgesamt drei Abschnitten ergibt: ein erster Abschnitt 41, der an einer unteren Stirnseite 21 des Mutterkörpers 2 endet, ein dritter Abschnitt 43, der an dem oberen und damit freien Ende der Klemmsegmente 3 endet, sowie ein zweiter Abschnitt 42, der jeweils an den ersten Abschnitt 41 und den dritten Abschnitt 43 angrenzt und von beiden Abschnitten 41, 43 umfasst ist.

Der dritte Abschnitt 43 umfasst in der dargestellten Ausgestaltung das Innengewinde 13 der Klemmsegmente 3, sodass das Innengewinde 12 des Mutternkörpers 2 von dem ersten Abschnitt 41 und dem zweiten Abschnitt 42 gebildet wird.

Der erste Abschnitt 41 und der dritte Abschnitt 43 haben dabei die gleiche Gewindesteigung, die gleich der Regelsteigung der Mutter 1 ist. Diese Regelsteigung der Mutter 1 ist dabei die Steigung des Bolzens 100.

Der zweite Abschnitt 42 hat eine zweite Gewindesteigung, die kleiner als die erste Gewindesteigung des ersten Abschnitts 41 sowie des dritten Abschnitts 43 ist. Die Steigung des zweiten Abschnitts 42 ist somit kleiner als die Steigung des Außengewindes des Bolzens 100, auf den die Mutter 1 aufgebracht wird. Die Höhe des zweiten Abschnitts 42 entlang der Längsachse 11 entspricht hier einem Gewindegang.

Die zweite Steigung des zweiten Abschnitts 42 wird in einer Ausgestaltung vorzugsweise so gewählt, dass die im obersten Gewindegang des dritten Abschnitts 43 orientierte Mutter 1 einen minimalen Luftspalt im ersten Abschnitt 41 ermöglicht. So ist beim Überschrauben sichergestellt, dass lediglich der Klemmbereich Kontakt zum Bolzen 100 hat. Beim Befestigen auf die gewünschte Vorspannkraft setzt sich das Innengewinde 10 der Mutter 1 minimal, bis alle Gewindegänge im Bereich des Mutternkörpers 2 in Eingriff kommen. Das gewährleistet einen geringeren und vom Anzugsmoment weniger beeinflussten Verlust des Klemmmoments zwischen dem ersten Befestigen und dem ersten Lösen der Mutter 1 von der Verbindung mit dem Bolzen 100.

Die Gewindesteigungen innerhalb der drei Abschnitte 41, 42, 43 sind dabei jeweils konstant.

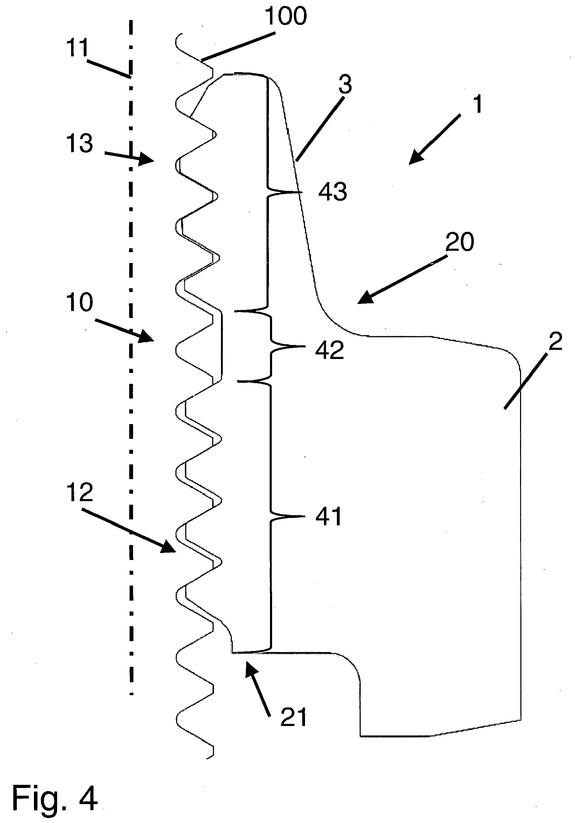

Die Mutter 1 der Ausgestaltung der Fig. 4 unterscheidet sich von der Ausgestaltung der Fig. 3 in der Art des zweiten Abschnitts 42. Die Mutter 1 der Fig. 4 hat einen gewindefreien zweiten Abschnitt 42, der in dieser Ausgestaltung durch einen Freistich realisiert ist. Durch den zweiten Abschnitt 42 wird somit das Innengewinde 10 der Mutter 1 unterbrochen. Im obersten Gewindegang des dritten Abschnitts 43 orientiert sich die Mutter 1 axial im Außengewinde des Bolzens 100, da hier eine maximale Klemmung vorliegt. Zusätzlich wird in den oberen Gewindegängen des dritten Abschnitts 43 das sichernde Klemmmoment durch die Flächennormalkraft und den Reibwert erzeugt.

Untersuchungen haben gezeigt, dass bei einer Mutter gemäß dem Stand der Technik mit einem Innengewinde mit konstanter Gewindesteigung ein Kontakt zwischen der Mutter und einem Bolzen unter Umständen nur an den Gewindegängen der unteren Stirnseite des Mutternkörpers sowie am oberen, freien Ende der Klemmsegmente besteht. Im Gegensatz dazu bewirken die drei Abschnitte 41, 42, 43 der Mutter 1 der Ausgestaltungen der Fig. 3 eine Verteilung der durch die Vorspannkraft auftretenden Kräfte auf den massiven Mutternkörper 2, sodass dort entsprechend auch Kontakt mit dem Bolzen 100 besteht. Insbesondere hat sich gezeigt, dass der Kontakt vor allem im ersten Abschnitt 41 und am freien Ende der Klemmsegmente 3 - also im dritten Abschnitt 43 - erfolgt.

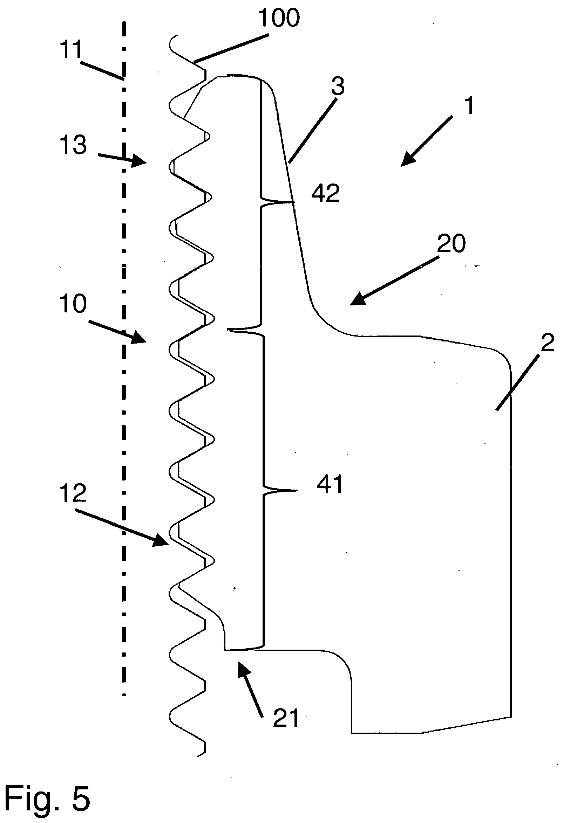

Die Mutter 1 der Fig. 5 hat ein Innengewinde 10, das von dem Innengewinde 13 der Klemmsegmente 3 und dem Innengewinde 12 des Mutternkörpers 2 gebildet wird und das sich nur aus dem ersten Abschnitt 41 und dem zweiten Abschnitt 42 zusammensetzt.

Der erste Abschnitt 41 umfasst in der dargestellten Ausgestaltung das Innengewinde 12 des Mutternkörpers 2 und der zweite Abschnitt 42 umfasst das Innengewinde 13 der Klemmsegmente 3. Somit hat der erste Abschnitt 41 und damit das Innengewinde 12 des Mutternkörpers 2 die erste Gewindesteigung. Daran angrenzend hat der zweite Abschnitt 42, der sich über die konische Verjüngung bereits stärker an den Bolzen 100 anlehnt, die geringere zweite Gewindesteigung.

Die erste Gewindesteigung und die zweite Gewindesteigung sind dabei jeweils konstant, sodass das Innengewinde im ersten Abschnitt 41 und im zweiten Abschnitt 42 jeweils nur eine Steigung hat. Die erste Gewindesteigung des ersten Abschnitts 41 ist dabei vorzugsweise die Regelsteigung der Mutter 1 und damit gleich der Gewindesteigung des Bolzens 100, auf dem die Mutter 1 zu befestigen ist.

Auch hier ist in einer Ausgestaltung die Reduzierung der Steigung im zweiten Abschnitt 42 derartig ausgeführt, dass die im obersten Gewindegang des zweiten Abschnitts 42 orientierte Mutter 1 einen minimalen Luftspalt des Innengewindes zum Bolzen 100 ermöglicht.

Untersuchungen haben gezeigt, dass bei der Ausgestaltung mit zwei Abschnitten 41, 42 und damit zwei in den Abschnitten jeweils konstanten unterschiedlichen Gewindesteigungen der Kontakt zwischen dem Bolzen 100 über das gesamte Innengewinde 10 der Mutter 1 gegeben ist. Damit werden auch die durch die Vorspannkraft auftretenden Kräfte auf das gesamte Innengewinde 10 der Mutter 1 verteilt.

Die erfindungsgemäße Mutter 1 bewirkt eine Reduzierung des Klemmmoments, sodass bei einem ersten Festziehen der Mutter 1 auf dem Bolzen 100 das erste Überschraubmoment reduziert werden kann.

## Patentansprüche

1. Mutter (1),
mit einem Mutternkörper (2) und mehreren von einer oberen Stirnseite (20) des Mutternkörpers (2) ausgehenden Klemmsegmenten (3),
wobei die Mutter (1) ein sich entlang einer Längsachse (11) erstreckendes Innengewinde (10) aufweist,
**dadurch gekennzeichnet,**
**dass** das Innengewinde (10) der Mutter (1) mindestens einen ersten Abschnitt (41) und einen zweiten Abschnitt (42) aufweist,
wobei der erste Abschnitt (41) eine über den ersten Abschnitt (41) konstante erste Gewindesteigung aufweist,
wobei der erste Abschnitt (41) an einer der oberen Stirnseite (20) des Mutternkörpers (2) gegenüberliegenden unteren Stirnseite (21) mündet, und
wobei der zweite Abschnitt (42) eine über den zweiten Abschnitt (42) konstante zweite Gewindesteigung, die kleiner als die erste Gewindesteigung ist, aufweist.

2. Mutter (1) nach Anspruch 1,
wobei eine Höhe des zweiten Abschnitts (42) entlang der Längsachse (11) gleich einer Höhe der Klemmsegmente (3) entlang der Längsachse (11) ist, und wobei das Innengewinde (11) der Mutter (1) nur aus dem ersten Abschnitt (41) und dem zweiten Abschnitt (42) besteht.

3. Mutter (1) nach Anspruch 1,
wobei das Innengewinde (11) der Mutter (1) nur aus dem ersten Abschnitt (41), dem zweiten Abschnitt (42) und einem dritten Abschnitt (43) besteht, und wobei eine Gewindesteigung des dritten Abschnitts (43) über den dritten Abschnitt (43) konstant und gleich der ersten Gewindesteigung des ersten Abschnitts (41) ist.

4. Mutter (1) nach einem der Ansprüche 1 bis 3,
wobei die Klemmsegmente (3) sich verjüngend ausgestaltet sind.

5. Mutter (1) nach Anspruch 4,
wobei die Klemmsegmente (3) sich konisch verjüngen.

6. Mutter (1) nach einem der Ansprüche 1 bis 5,
wobei der zweite Abschnitt (42) mindestens einen Gewindegang umfasst.
